# EUROPÄISCHE PATENTSCHRIFT

(11) **EP 1 913 280 B1**
(45) Veröffentlichungstag und Bekanntmachung des Hinweises auf die Patenterteilung: **02.11.2011**
(21) Anmeldenummer: 06763704.1
(22) Anmeldetag: 14.06.2006
(51) Int. Cl.: F16D 65/18

(54) **FALTENBALG FÜR EINE SELBSTVERSTÄRKENDE, ELEKTROMECHANISCHE SCHEIBENBREMSE UND SCHEIBENBREMSE MIT EINEM DERARTIGEN FALTENBALG**
BELLOWS FOR A SELF-ENERGISING ELECTROMECHANICAL DISC BRAKE AND DISC BRAKE PROVIDED WITH SUCH A BELLOWS
SOUFFLET EN CAOUTCHOUC POUR FREIN A DISQUE ELECTROMECANIQUE AUTORENFORÇATEUR ET FREIN A DISQUE MUNI D'UN TEL SOUFFLET EN CAOUTCHOUC

(30) Priorität: 29.07.2005 DE 102005035597
(43) Veröffentlichungstag der Anmeldung: 23.04.2008
(73) Patentinhaber: ROBERT BOSCH GMBH, 70442 Stuttgart (DE)
(72) Erfinder: CAO, Chi-Thuan, 70825 Korntal-Muenchingen (DE); BAUMANN, Dietmar, 71282 Hemmingen (DE); HOFMANN, Dirk, 70439 Stuttgart (DE); VOLLERT, Herbert, 71665 Vaihingen/enz (DE); NAGEL, Willi, 71686 Remseck/Hochdorf (DE); HENKE, Andreas, 34474 Diemelstadt (DE); FOITZIK, Bertram, 71636 Ludwigsburg (DE); GOETZELMANN, Bernd, 71063 Sindelfingen (DE)
(86) Internationale Anmeldenummer: PCT/EP2006/063199
(87) Internationale Veröffentlichungsnummer: WO 2007/012522

(56) Entgegenhaltungen:
- WO-A-2005/028905
- US-A- 3 664 468
- US-A- 5 152 376
- US-A1- 2003 019 696
- PATENT ABSTRACTS OF JAPAN Bd. 014, Nr. 271 (M-0983), 12. Juni 1990 (1990-06-12) & JP 02 080127 A (HITACHI LTD), 20. März 1990 (1990-03-20)

## Beschreibung

### Stand der Technik

Die Erfindung betrifft einen Faltenbalg für eine selbstverstärkende, elektromechanische Scheibenbremse mit den Merkmalen des Oberbegriffs des Anspruchs 1. Des weiteren betrifft die Erfindung eine selbstverstärkende Scheibenbremse mit einem derartigen Faltenbalg gemäß dem Oberbegriff des Anspruchs 10.

Scheibenbremsen sind in einer nahezu unüberschaubaren Vielzahl unterschiedlicher Ausführungsformen an sich bekannt. Üblich im Kraftfahrzeugbereich sind derzeit hydraulische Scheibenbremsen. Vergleichsweise jung sind elektromechanische Scheibenbremsen, deren Reibbremsbeläge zur Betätigung der Scheibenbremse von einem Elektromotor über ein Rotations-/Translations-Umsetzungsgetriebe gegen eine Bremsscheibe gedrückt werden. Normalerweise ist dem Elektromotor und dem Rotations-/Translations-Getriebe ein Untersetzungsgetriebe zwischengeschaltet. Das Rotations-/Translations-Getriebe ist vielfach ein Schraubgetriebe, es kommt allerdings beispielsweise auch ein Nocken oder dgl. als Rotations-/Translations-Getriebe in Betracht, der vom Elektromotor über das Untersetzungsgetriebe verschwenkt wird und der dabei den oder die Reibbremsbeläge gegen die Bremsscheibe drückt.

Auch sind elektromechanische Scheibenbremsen mit einer mechanischen oder sonstigen Selbstverstärkungseinrichtung bekannt, die eine beim Bremsen von der drehenden Bremsscheibe auf den oder die gegen sie gedrückten Reibbremsbeläge ausgeübte Brems- und Reibungskraft in eine Andruckkraft wandelt, die die Reibbremsbeläge zusätzlich zu einer vom Elektromotor aufgebrachten Andruckkraft gegen die Bremsscheibe drückt.

Bekannte elektromechanische Scheibenbremsen mit mechanischer Selbstverstärkung weisen eine Belagträgerplatte auf, die parallel zur Bremsscheibe auf einer Seite der Bremsscheibe angeordnet ist und auf deren der Bremsscheibe zugewandter Vorderseite der eine Reibbremsbelag angeordnet ist. Zur Betätigung der Scheibenbremse, d. h. zum Bremsen, wird die Belagträgerplatte mit dem Reibbremsbelag sowohl quer als auch parallel zur Bremsscheibe bewegt. Zum Schutz der Mechanik der Selbstverstärkungseinrichtung und der elektromechanischen Betätigungseinrichtung ist die Verwendung eines Faltenbalgs bekannt, der einen Zwischenraum zwischen der Belagträgerplatte und dem Bremssattel umschließt. Gegenstand der Erfindung ist ein solcher Faltenbalg für eine selbstverstärkende, elektromechanische Scheibenbremse.

Die internationale Patentanmeldung WO 2005/028 905 A offenbart eine selbstverstärkende, elektromechanische Scheibenbremse mit Faltenbälgen zum Schutz der Mechanik vor Verschmutzung. Die Faltenbälge sind lochscheibenförmig und dichten an Durchtrittsstellen von Einstellschrauben zur Verschleißnachstellung ab.

Das Patent US 5 152 376 A, als der nächstliegende Stand der Technik, offenbart eine Dichtungsanordnung an einem Durchtritt eines Betätigungshebels einer Trommelbremse mit einem ovalen Faltenbalg.

Die Patentanmeldung US 2003/0 019 696 A offenbart ebenfalls eine Abdichtung am Durchtritt eines Betätigungshebels einer Trommelbremse mit einem faltenlosen kegelstumpfförmigen Balg mit ovalen Querschnitt.

Das Patent Abstracts JP 02 080 127 A offenbart die Herstellung eines Faltenbalgs mit ovalem Querschnitt und umlaufenden Falten in einem Gesenk mit plattenförmigen, hydraulisch zusammenfahrbaren Werkzeugen.

### Erläuterung und Vorteile der Erfindung

Der erfindungsgemäße Faltenbalg weist die Merkmale des Anspruchs 1. Eine bevorzugte Form des Querschnitts des Faltenbalgs ist eine Ellipse oder jedenfalls näherungsweise eine Ellipse (Anspruch 2). Auch eine in Richtung eines Ovals verformte Ellipse oder ein Oval sind mögliche Querschnittsformen des erfindungsgemäßen Faltenbalgs. Die Längsseiten des Faltenbalgs können gekrümmt oder gerade sein, auch eine Krümmung einer oder beider Längsseiten nach innen ist möglich. Im Falle gerader Längsseiten ist der Querschnitt des Faltenbalgs ein Oval. Der Querschnitt des Faltenbalgs muss nicht zwingend symmetrisch sein, in diesem Fall weicht der Querschnitt von der mathematischen Form einer Ellipse oder eines Ovals ab. Der erfindungsgemäße Faltenbalg weist also eine längliche Form mit gerundeten Schmalseiten auf, die Längsseiten können wie bereits gesagt ebenfalls gerundet oder gerade sein. Die Krümmungsradien können sich in Umfangsrichtung ändern.

Die längliche Form des Faltenbalgs ist an selbstverstärkende, elektromechanische Scheibenbremsen angepasst, deren Belagträgerplatten üblicherweise in Umfangsrichtung der Bremsscheibe eine größere Erstreckung als in radialer Richtung zur Bremsscheibe aufweisen. Der Zwischenraum zwischen der Belagträgerplatte und dem Bremssattel und die vor Nässe und Schmutz zu schützende Mechanik lässt sich durch die Form des erfindungsgemäßen Faltenbalgs platzsparend umschließen. Außerdem ermöglicht der Faltenbalg eine Bewegung der Belagträgerplatte in Bezug auf den Bremssattel sowohl parallel als auch quer zur Bremsscheibe. Auch eine Schwenkbewegung der Belagträgerplatte, d. h. eine Abweichung von der Parallelität zur Bremsscheibe, wird vom erfindungsgemäßen Faltenbalg ausgeglichen. Der erfindungsgemäße Faltenbalg ist somit an die Bewegung der Belagträgerplatte einer selbstverstärkenden, elektromechanischen Scheibenbremse in Bezug auf deren Bremssattel angepasst. Dabei ermöglicht die Erfindung einen in axialer Richtung, d. h. in zum Querschnitt senkrechter Richtung, kurzen bzw. niedrigen Faltenbalg.

Die Schrägfalten verbessern die Beweglichkeit des Faltenbalgs bei einer Parallelverschiebung seiner beiden Enden gegeneinander und zugleich einer Entfernung voneinander oder Annäherung aneinander der beiden Enden. Solche Bewegungen vollführt der Faltenbalg bei einer Bremsbetätigung, wenn sich die Belagträgerplatte der Scheibenbremse in Drehrichtung mit der Bremsscheibe mitbewegt und zugleich auf die Bremsscheibe zu oder von ihr wegbewegt.

Die Unteransprüche haben vorteilhafte Ausgestaltungen und Weiterbildungen der im Anspruch 1 angegebenen Erfindung zum Gegenstand.

Die Scheibenbremse mit den Merkmalen des Anspruchs 10 weist einen Faltenbalg der vorstehend erläuterten Art auf. Eine Erläuterung der Scheibenbremse ist durch die vorstehende Erläuterung des Faltenbalgs und die Erläuterung selbstverstärkender, elektromechanischer Scheibenbremsen bereits erfolgt, zur Vermeidung von Wiederholungen wird insoweit auf die vorstehenden Erläuterungen verwiesen.

### Zeichnung

Die Erfindung wird nachfolgend anhand eines in der Zeichnung dargestellten Ausführungsbeispiels näher erläutert. Es zeigen:
- Figur 1: eine Scheibenbremse mit einem Faltenbalg gemäß der Erfindung mit Blickrichtung axial auf eine Bremsscheibe;
- Figur 2: einen Querschnitt des Faltenbalgs entlang Linie II-II in Figur 1; und
- Figur 3: eine vergrößerte Darstellung der Einzelheit III in Figur 1.

### Beschreibung des Ausführungsbeispiels

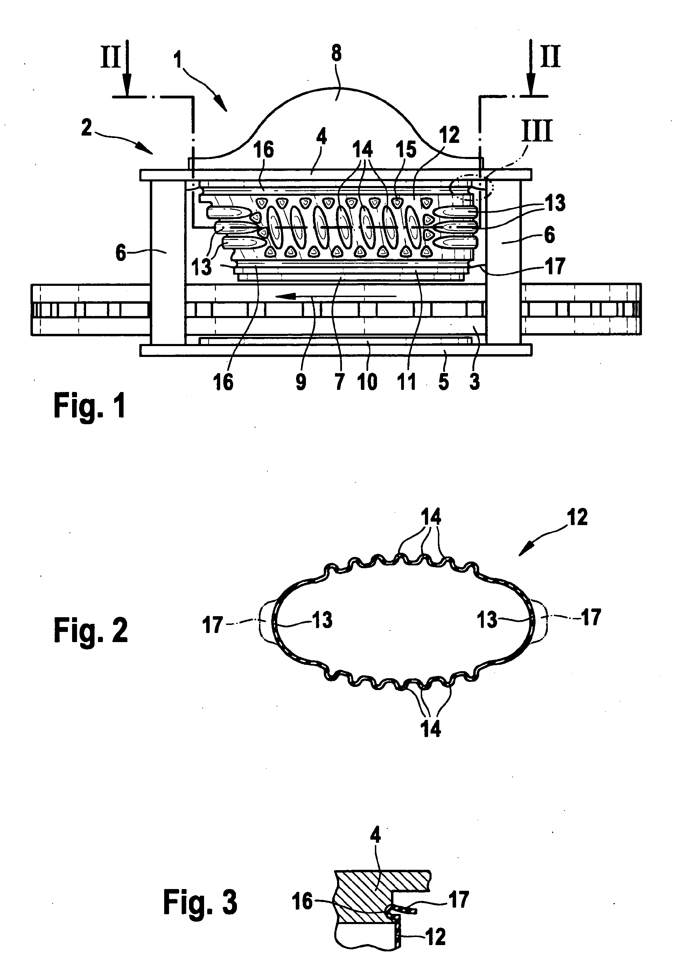

Die in Figur 1 dargestellte, selbstverstärkende elektromechanische Scheibenbremse 1 weist einen Bremssattel 2 auf, der als Schwimmsattel ausgeführt ist, d. h. er ist mit in der Zeichnung nicht sichtbaren Führungen quer zu einer Bremsscheibe 3 verschieblich. Der Bremssattel 1 ist im dargestellten und beschriebenen Ausführungsbeispiel der Erfindung ein Rahmensattel mit zwei Bremssattelplatten 4, 5 die durch Anker 6 miteinander verbunden sind. Die Bremssattelplatten 4, 5 sind beiderseits der Bremsscheibe 3 angeordnet, sie sind parallel zueinander und zur Bremsscheibe 3. Die Anker 6 verbinden die Bremssattelplatten 4, 5 quer zur Bremsscheibe 3 außerhalb eines Umfangs der Bremsscheibe 3. Die Anker 6 sind in etwa in Längsmittelebenen der Bremssattelplatten 4, 5 angeordnet, so dass sie bei Betätigung der Scheibenbremse 1 im Wesentlichen nur auf Zug beansprucht werden. Die Führungen zur quer verschieblichen Führung des als Schwimmsattel ausgebildeten Bremssattels 2 befinden sich in Figur 1 unterhalb der Anker 6 und sind deswegen nicht sichtbar. Die Bremssattelplatten 4, 5 und die Anker 6 des Bremssattels 2 können einstückig miteinander oder mehrstückig und zusammengesetzt sein.

Die Scheibenbremse 1 weist eine in der Zeichnung nicht sichtbare elektromechanische Betätigungseinrichtung mit einem Elektromotor, einem Untersetzungsgetriebe und einem Zahnstangengetriebe auf, mit dem ein Reibbremsbelag 7 zur Betätigung der Scheibenbremse 1 in einem spitzen Winkel und in einer Umfangsrichtung zur Bremsscheibe 3 bewegbar ist. Der Reibbremsbelag 7 wird auf einer gedachten schraubenlinienförmigen Bahn um die Drehachse der Bremsscheibe 3 verschoben. Die Betätigungseinrichtung ist in einem Motor- und Getriebegehäuse 8 untergebracht und deswegen nicht sichtbar. Das Motor- und Getriebegehäuse 8 ist auf einer der Bremsscheibe 3 abgewandten Außenseite der einen Bremssattelplatte 4 des Bremssattels 2 angebracht. Derartige elektromechanische Betätigungseinrichtungen für elektromechanische Scheibenbremsen sind dem Fachmann an sich bekannt und sollen, da die elektromechanische Betätigungseinrichtung nicht den eigentlichen Gegenstand der Erfindung bildet, hier nicht näher erläutert werden.

Die Scheibenbremse 1 weist eine in der Zeichnung nicht sichtbare mechanische Selbstverstärkungseinrichtung auf, die einen Rampenmechanismus umfasst. Der Rampenmechanismus führt den Reibbremsbelag 7 auf der vorstehend erläuterten schraubenlinienförmigen Bahn um die Drehachse der Bremsscheibe 3 in einem spitzen Winkel zur Bremsscheibe 3 und in Umfangsrichtung zur Bremsscheibe 3. Wird der Reibbremsbelag 7 zur Betätigung der Scheibenbremse 1 von der elektromechanischen Betätigungseinrichtung gegen die Bremsscheibe 3 gedrückt, übt die Bremsscheibe 3 eine Reibungskraft in Umfangsrichtung auf den Reibbremsbelag 7 in Drehrichtung der Bremsscheibe 3 aus. Die angenommene Drehrichtung ist in Figur 1 mit dem Pfeil 9 dargestellt. Die Abstützung des Reibbremsbelags 7 mit den nicht sichtbaren, in einem spitzen Winkel zur Bremsscheibe 3 verlaufenden Rampen bewirkt auf Grund des sog. Keilprinzips eine Kraft mit einer Komponente quer zur Bremsscheibe 3, die den Reibbremsbelag 7 zusätzlich zu einer von der elektromechanischen Betätigungseinrichtung aufgebrachten Andruckkraft gegen die Bremsscheibe 3 drückt. Die Bremskraft der Scheibenbremse 1 wird dadurch verstärkt. Derartige Rampenmechanismen sind dem Fachmann bekannt und sollen, weil der Rampenmechanismus nicht Fachmann bekannt und sollen, weil der Rampenmechanismus nicht den eigentlichen Gegenstand der Erfindung bildet, hier nicht näher erläutert werden.

Auf der gegenüberliegenden Seite wie der eine Reibbremsbelag 7 ist ein zweiter Reibbremsbelag 10 auf einer der Bremsscheibe 3 zugewandten Innenseite der dortigen Bremssattelplatte 5 des Bremssattels 2 angeordnet. Wird zur Betätigung der Scheibenbremse 1 der eine Reibbremsbelag 7 wie beschrieben mit der elektromechanischen Betätigungseinrichtung gegen die eine Seite der Bremsscheibe 3 gedrückt, wird der Bremssattel 2 quer zur Bremsscheibe 3 verschoben und drückt den anderen Reibbremsbelag 10 gegen die andere Seite der Bremsscheibe 3, so dass beide Reibbremsbeläge 7, 10 die Bremsscheibe 3 bremsen.

Der eine Reibbremsbelag 7 ist auf einer Belagträgerplatte 11 angeordnet, die mit Abstand von der einen Bremssatteiplatte 4 des Bremssattels 2 und parallel zur Bremsscheibe 3 angeordnet ist. In einem Zwischenraum zwischen der Belagträgerplatte 11 und der Bremssattelplatte 4 ist ein erfindungsgemäßer Faltenbalg 12 angeordnet, der die Teile der Selbstverstärkungseinrichtung und der elektromechanischen Betätigungseinrichtung 1, soweit sie sich im Zwischenraum zwischen der Belagträgerplatte 11 und der Bremssattelplatte 4 befinden, umschließt und vor Nässe und Verschmutzung schützt. Der Faltenbalg 12 verdeckt den Rampenmechanismus und zusammen mit dem Motor- und Getriebegehäuse 8 die Betätigungseinrichtung, weswegen der Rampenmechanismus und die Betätigungseinrichtung in der Zeichnung nicht sichtbar sind.

Der Faltenbalg 12 ist schlauchförmig mit zumindest in etwa elliptischem Querschnitt. Der Querschnitt des Faltenbalgs 12 verkleinert sich in einer Richtung, und zwar in Richtung der Belagträgerplatte 11. Außerdem ist der Faltenbalg 12 schräg, er weist eine Neigung entgegen der vorgesehenen Drehrichtung 9 der Bremsscheibe 3 auf. Die Grundform des Faltenbalgs 12 ist also zumindest näherungsweise eine Mantelfläche eines Pyramidenstumpfs einer schiefen Pyramide mit elliptischem Querschnitt. Abweichungen von der beschriebenen Form des Faltenbalgs 12 sind möglich, beispielsweise kann der Querschnitt des Faltenbalgs 12 zu einem Oval oder ovalähnlich verändert sein, der Querschnitt kann über die axiale Erstreckung des Faltenbalgs 12 konstant und/oder der Faltenbalg 12 gerade anstatt schief sein. Wird der Reibbremsbelag 7 mit der Belagträgerplatte 11 bei Betätigung der Scheibenbremse 2 in Drehrichtung 9 der Bremsscheibe 3 verschoben, verringert sich die Schiefstellung des Faltenbalgs 12, u. U. kann der Faltenbalg 12 durch die Verformung gerade oder sogar in entgegengesetzter Richtung schief werden. Mit Grundform des Faltenbalgs 12 ist dessen Form ohne seine noch zu erläuternden Falten und ohne seine Anschlüsse an die Bremssattelplatte 4 und die Belagträgerplatte 11 gemeint. Der Querschnitt des Faltenbalgs 12 an der in Figur 1 durch die Schnittlinie II-II angegebene Ebene ist in Figur 2 dargestellt. Dargestellt ist nur der Querschnitt in der angegebenen Schnittebene und nicht Bereiche des Faltenbalgs 12 und der Scheibenbremse 1, die sich hinter der Schnittebene befinden. Eine Axialerstreckung des Faltenbalgs 12 ist kurz im Verhältnis zu seiner Querschnittsfläche, die Axialerstreckung liegt beispielsweise zwischen etwa ¼ bis ½ einer gedachten langen Halbachse des elliptischen Querschnitts.

Der Faltenbalg 12 weist in seiner Umfangsrichtung verlaufende, zueinander parallele Umfangsfalten 13 im Bereich einander gegenüberliegender Umfangsabschnitte mit kleiner Krümmung auf. Die Umfangsabschnitte mit kleiner Krümmung und die Umfangsfalten 13 befinden sich in den Bereichen, in denen die gedachte lange Halbachse den elliptischen Querschnitt des Faltenbalgs 12 schneidet. An Längsseiten zwischen den genannten, einander gegenüberliegenden Umfangsabschnitten mit kleiner Krümmung weist der Faltenbalg 12 Schrägfalten 14 auf, die schräg zu gedachten Querschnittsebenen des Faltenbalgs 12 verlaufen. Die Schrägfalten 14 können, müssen aber nicht parallel zueinander sein. Grund für die schräge Ausrichtung der Schrägfalten 14 ist folgender: Bei Betätigung der Scheibenbremse 1 wird die Belagträgerplatte 11 mit dem Reibbremsbelag 7 auf der schon erläuterten schraubenlinienförmigen Bahn um die Drehachse der Bremsscheibe 3 bewegt. Die Bewegung der Belagträgerplatte 11 ist also parallel und quer zur Bremsscheibe 3. Die Bewegung parallel zur Bremsscheibe 3 erfolgt in der Drehrichtung 9. Der Abstand der Belagträgerplatte 11 von der Bremssattelplatte 4 des Bremssattels 2 vergrößert sich also, der Faltenbalg 12 wird axial gedehnt und gleichzeitig aufgerichtet, seine Schiefe verringert sich. Die Schräge der Schrägfalten 14 ist so gewählt, dass sie bei der geschilderten Bewegung eine Schwenkbewegung vollführen, ihre Schrägstellung verringert sich. Die Vergrößerung des Abstands der Belagträgerplatte 11 von der Bremssattelplatte 4 bei Betätigung der Scheibenbremse 1 wird zumindest teilweise durch das erläuterte Schwenken der Schrägfalten 14 ausgeglichen, die Schrägfalten 14 brauchen nicht oder zumindest weniger gedehnt zu werden als es bei einer zu den gedachten Querschnittsebenen des Faltenbalgs 12 senkrechten Längserstreckung der Schrägfalten 14 der Fall wäre. Der Faltenbalg 12 ist dadurch leichter in der bei Betätigung der Scheibenbremse 1 erforderlichen (und der dazu entgegengesetzten) Richtung verformbar.

Die Umfangsfalten 13 und die Schrägfalten 14 verjüngen sich zu ihren Enden hin, wodurch die Verformbarkeit des Faltenbalgs 12 verbessert und sein Verformungswiderstand verringert ist. Im Bereich der verjüngten Enden der Umfangsfalten 13 und der Schrägfalten 14 weist der Faltenbalg 12 Domfalten 15 auf, die die Verformbarkeit des Faltenbalgs 12 weiter verbessern und den Verformungswiderstand verringern, weil sie zusätzliches, verformbares Material in Bereichen des Faltenbalgs 12 zur Verfügung stellen, in denen sich die Umfangsfalten 13 und die Schrägfalten 14 schwenkend zueinander bewegen. Die Form der Domfalten 15 ist an die Bereiche zwischen den sich verjüngenden Enden der Umfangsfalten 13 und der Schrägfalten 14, wo die Domfalten 15 angeordnet sind, angepasst. Im dargestellten und beschriebenen Ausführungsbeispiel der Erfindung weisen die Domfalten 15 näherungsweise eine dreiecksförmige Grundfläche mit gerundeten Ecken und gewölbten Dreiecksseiten auf.

Der Faltenbalg 12 besteht aus Silikon, also einem gummiartigen Kunststoff. Die Formgebung des Faltenbalgs 12 und die Ausgestaltung und Anordnung seiner Falten 13, 14, 15 ist unter den Aspekten gewählt worden, Verformungskräfte möglichst niedrig zu halten und dass der Faltenbalg 12 mit seinen Falten 13, 14, 15 nicht in die mechanischen Teile der Selbstverstärkungseinrichtung und der Betätigungseinrichtung der Scheibenbremse 1 gerät, auch wenn der Faltenbalg 12 die Selbstverstärkungseinrichtung und die Betätigungseinrichtung platzsparend, d. h. zumindest stellenweise eng umschließt.

Mit seinen Stirnrändern 16 ist der Faltenbalg 12 an der Bremssattelplatte 4 des Bremssattels 2 auf der einen und an der Belagträgerplatte 11 auf der anderen Seite befestigt. Die Stirnränder 16 sind dazu als umlaufende, gerundete und nach innen stehende Sicken ausgeführt, die in korrespondierende, umlaufende Nuten der Bremssattelplatte 4 und der Belagträgerplatte 11 eingreifen. Der eine Stirnrand 16 des Faltenbalgs 12 und sein Eingriff in die umlaufende Nut der Bremssattelplatte 4 ist in Figur 3 vergrößert dargestellt. Zur Bildung der umlaufenden Sicke sind die Stirnränder 16 also zunächst nach innen und anschließend wieder nach außen stehend ausgebildet. Es ist auch möglich, die Sicken der Stirnränder 16 des Faltenbalgs 12 nach außen stehend auszubilden, so dass sie einen umlaufenden Wulst der Bremssattelplatte 4 und der Belagträgerplatte 11 übergreifen (nicht dargestellt). Zur Sicherung können Bänder, Drähte, Rohrschellen oder dgl. in die Sicken der Stirnränder 16 des Faltenbalgs 12 eingelegt und festgespannt sein, im dargestellten und beschriebenen Ausführungsbeispiel ist das nicht der Fall.

Zur einfachen Montier- und Demontierbarkeit sind Montagelaschen 17 an den Stirnrändern 16 des Faltenbalgs 12 vorgesehen, an denen die Stirnränder 16 des Faltenbalgs 12 greifbar sind. Im dargestellten und beschriebenen Ausführungsbeispiel sind jeweils zwei Montagelaschen 17 an jedem Stirnrand 16 vorgesehen, und zwar einander gegenüberliegend an den Umfangsabschnitten des Faltenbalgs 12 mit den kleinen Krümmungsradien. Die Lage der Montagelaschen 17 ist in Figur 2 mit Strichpunktlinien angedeutet.

Anzustreben ist ein Faltenbalg 12, der sich bei der angegebenen Verformung bei Betätigung der Scheibenbremse 1 biegeschlaff verhält oder dessen Verformungskraft niedrig ist, wobei der Faltenbalg 12 zugleich eine ausreichende Formstabilität aufweisen muss, die verhindert, dass der Faltenbalg 12 zwischen bewegliche Teile der Selbstverstärkungseinrichtung oder der Betätigungseinrichtung gelangt.

## Patentansprüche

1. Faltenbalg für eine selbstverstärkende, elektromechanische Scheibenbremse, der schlauchförmig ist und einen nicht kreisförmigen, gerundeten Querschnitt aufweist, dessen Krümmungsradien an zwei einander gegenüberliegenden Umfangsabschnitten kleiner als der halbe Abstand der beiden Umfangsabschnitte voneinander ist, **dadurch gekennzeichnet, dass** der Faltenbalg (12) Schrägfalten (14) aufweist, die gedachte Querschnittsflächen des Faltenbalgs (12) schräg schneiden.

2. Faltenbalg nach Anspruch 1, **dadurch gekennzeichnet, dass** der Faltenbalg (12) einen elliptischen Querschnitt aufweist.

3. Faltenbalg nach Anspruch 1, **dadurch gekennzeichnet, dass** der Faltenbalg (12) verschieden große Querschnitte an seinen beiden Stirnenden (16) aufweist.

4. Faltenbalg nach Anspruch 1, **dadurch gekennzeichnet, dass** der Faltenbalg (12) schief ist.

5. Faltenbalg nach Anspruch 1, **dadurch gekennzeichnet, dass** der Faltenbalg (12) im Bereich seiner Umfangsabschnitte mit den kleinen Krümmungsradien Umfangsfalten (13) aufweist, die in etwa parallel zu seinen Stirnrändern (16) verlaufen.

6. Faltenbalg nach Anspruch 1, **dadurch gekennzeichnet, dass** der Faltenbalg (12) Falten (13, 14) aufweist, die sich zu ihren Enden hin verjüngen.

7. Faltenbalg nach Anspruch 6, **dadurch gekennzeichnet, dass** der Faltenbalg (12) Domfalten (15) in Bereichen zwischen den verjüngten Enden der Falten (13, 14) aufweist.

8. Faltenbalg nach Anspruch 1, **dadurch gekennzeichnet, dass** der Faltenbalg (12) einen nach innen oder nach außen stehenden Stirnrand (16) aufweist.

9. Faltenbalg nach Anspruch 1, **dadurch gekennzeichnet, dass** der Faltenbalg (12) mindestens eine Montagelasche (17) aufweist.

10. Selbstverstärkende Scheibenbremse mit einem Bremssattel (2), mit einer Belagträgerplatte (11), die parallel und quer zu einer Bremsscheibe (3) bewegbar ist, und mit einem Faltenbalg (12), der einen Zwischenraum zwischen der Belagträgerplatte (11) und dem Bremssattel (2) umschließt, **dadurch gekennzeichnet, dass** der Faltenbalg (12) schlauchförmig ist und einen nicht kreisförmigen, gerundeten Querschnitt aufweist, dessen Krümmungsradien an zwei einander gegenüberliegenden Umfangsabschnitten kleiner als der halbe Abstand der beiden Umfangsabschnitte voneinander ist, und dass der Faltenbalg (12) Schrägfalten (14) aufweist, die gedachte Querschnittsflächen des Faltenbalgs (12) schräg schneiden.

## Claims

1. Bellows for a self-energerizing electromechanical disc brake, which are in the form of a hose and have a non-circular, rounded cross section, whose radii of curvature are smaller on two opposite circumferential sections than half the distance between the two circumferential sections, **characterized in that** the bellows (12) have oblique folds (14) which intersect obliquely virtual cross-sectional faces of the bellows (12).

2. Bellows according to Claim 1, **characterized in that** the bellows (12) have an elliptical cross section.

3. Bellows according to Claim 1, **characterized in that** the bellows (12) have cross sections of different sizes on its two front ends (16).

4. Bellows according to Claim 1, **characterized in that** the bellows (12) is skewed.

5. Bellows according to Claim 1, **characterized in that** the bellows (12) have, in the region of its circumferential sections with the small radii of curvature, circumferential folds (13) which run approximately parallel to its front edges (16).

6. Bellows according to Claim 1, **characterized in that** the bellows (12) have folds (13, 14) which taper towards their ends.

7. Bellows according to Claim 6, **characterized in that** the bellows (12) have dome folds (15) in the regions between the tapered ends of the folds (13, 14).

8. Bellows according to Claim 1, **characterized in that** the bellows (12) have an inwardly or outwardly protruding front edge (16).

9. Bellows according to Claim 1, **characterized in that** the bellows (12) have at least one mounting clip (17).

10. Self-energerizing disc brake having a brake calliper (2), having a pad carrier plate (11) which can be moved parallel and transversely with respect to a break disc (3), and having bellows (12) which surround an intermediate space between the pad carrier plate (11) and the brake calliper (2), **characterized in that** the bellows (12) are in the form of a hose and have a non-circular, rounded cross section whose radii of curvature are smaller on two opposite circumferential sections than half the distance between the two circumferential sections, and in the bellows (12) have oblique folds (14) which intersect obliquely the virtual cross-sectional faces of the bellows (12).

## Revendications

1. Soufflet pour un frein à disque électromécanique autorenforçateur qui prend une forme de tuyau flexible et présente une section transversale arrondie non circulaire dont les rayons de courbure sont inférieurs, au niveau des deux sections périphériques opposées, à la moitié de la distance des deux sections périphériques, **caractérisé en ce que** le soufflet (12) présente des plis obliques (14) qui coupent en oblique les surfaces en coupe transversale imaginaires du soufflet (12).

2. Soufflet selon la revendication 1, **caractérisé en ce que** le soufflet (12) présente une section transversale elliptique.

3. Soufflet selon la revendication 1, **caractérisé en ce que** le soufflet (12) présente des sections transversales de différentes tailles au niveau de ses deux extrémités frontales (16).

4. Soufflet selon la revendication 1, **caractérisé en ce que** le soufflet (12) est penché.

5. Soufflet selon la revendication 1, **caractérisé en ce que** le soufflet (12) présente, dans la zone de ses sections périphériques dotées de petits rayons de courbure, des plis périphériques (13) s'étendant quelque peu parallèlement à ses bords frontaux (16).

6. Soufflet selon la revendication 1, **caractérisé en ce que** le soufflet (12) comporte des plis (13, 14) se rétrécissant en direction de leur extrémité.

7. Soufflet selon la revendication 6, **caractérisé en ce que** le soufflet (12) présente des plis pointus (15) dans les régions situées entre les extrémités rétrécies des plis (13, 14).

8. Soufflet selon la revendication 1, **caractérisé en ce que** le soufflet (12) présente un bord frontal (16) orienté vers l'intérieur ou vers l'extérieur.

9. Soufflet selon la revendication 1, **caractérisé en ce que** le soufflet (12) comporte au moins une bride de fixation (17).

10. Frein à disque autorenforçateur équipé d'un étrier de frein (2), d'une plaque porte-doublure (11) pouvant être déplacée parallèlement et transversalement par rapport à un disque de frein (3) et d'un soufflet (12) enceignant un espace intermédiaire prévu entre la plaque porte-doublure (11) et l'étrier de frein (2), **caractérisé en ce que** le soufflet (12) prend une forme de tuyau flexible et présente une section transversale arrondie de forme non circulaire dont les rayons de courbure sont inférieurs, au niveau des deux sections périphériques opposées, à la moitié de la distance des deux sections périphériques et que le soufflet (12) présente des plis obliques (14) coupant en oblique des surfaces en coupe transversale imaginaires du soufflet (12).
